# EUROPEAN PATENT APPLICATION

(11) **EP 4 586 380 A1**
(43) Date of publication of application: **16.07.2025**
(21) Application number: 25150641.6
(22) Date of filing: 08.01.2025
(51) Int. Cl.: H01M 50/213, H01M 50/247, H01M 50/503, H01M 50/516

(54) **BATTERY PACK**

(30) Priority: 11.01.2024 CN 202410044719
(71) Applicant: Techtronic Cordless GP, Anderson, SC 29621 (US)
(72) Inventor: ZHAO, Jiang, Dongguan City (CN); LIU, Ya Bin, Dongguan City (CN); LI, Sheng Ping, Dongguan City (CN); GUO, Zhao Jie, Dongguan City (CN); DAI, Zhi Kai, Dongguan City (CN)
(74) Representative: Meissner Bolte Partnerschaft mbB

(57) **Abstract**

The disclosure discloses a battery pack including a battery holder; a battery cell surrounded by and supported in the battery holder; a welding strap including a welding portion welded to an electrode terminal of a battery cell to make an electrical connection, and a projection located at a central portion of the welding portion, the projection being spaced apart from the electrode terminal of the battery cell. By providing the projection aligned with and spaced apart from a non-welding zone of the electrode terminal of the battery cell at the welding portion of the welding strap, the non-welding zone can be protected at the time of welding, and the welding can be accurately performed on an allowable welding zone.

## Description

### TECHNICAL FIELD

The disclosure relates to the field of battery packs, and particularly, relates to a welding strap for a battery pack and a battery pack including the welding strap.

### BACKGROUND

Currently, power tools are greatly improved by development of battery technology, and battery packs can be mounted to power tools, thereby eliminating need of wires.

Battery cells commonly used in a battery pack are secondary batteries, particularly lithium ion secondary batteries, which typically use doped and de-doped lithium ions. A plurality of battery cells are enclosed within a housing to form a battery pack. Battery packs including battery cells such as lithium ion secondary batteries have been widely used in electronic devices such as personal computers and mobile phones, electric vehicles, power tools, and the like, especially hand-held power tools.

In addition to the above-described plurality of battery cells, the battery pack further includes welding straps that are electrically connected to the battery cells and include welding portions by which the welding straps are welded to terminals of the battery cells to make electrical connections. The welding portions of the welding straps are typically completely surrounded by other portions around them to facilitate welding and processing, or be easy to process.

For certain design considerations, one or more non-welding zones are retained in some zones of the electrode terminal of the battery cell. However, in the conventional design and connection process of the battery pack, once the welding strap is mounted on the battery cell, the welding portion of the welding strap and the electrode terminal of the battery cell is correspondingly aligned with each other. If the conventional steps are performed, the non-welding zone of the electrode terminal of the battery cell would be destroyed by the welding process subsequently performed, causing damages to the non-welding zone, and even causing safety accidents of the battery cell.

Furthermore, in some battery pack designs, it might be difficult for such designs in which the welding portion of the welding strap is completely surrounded by other portions around it, to meet other requirements, for example, such designs cause structural interferences between the welding strap and the housing of the battery pack, so that the assembling cannot be properly finished.

### SUMMARY

The disclosure provides a welding strap for a battery pack and a battery pack including the welding strap, to solve one or more of the above problems.

In one aspect, the disclosure discloses a battery pack including: a battery holder; a battery cell surrounded by and supported in the battery holder; a welding strap, wherein the welding strap includes a welding portion welded to an electrode terminal of the battery cell to make an electrical connection, and a projection located at a central portion of the welding portion, the projection being spaced apart from the electrode terminal of the battery cell.

According to one embodiment of the disclosure, the projection is aligned with and spaced apart from a non-welding zone of a negative terminal.

According to an embodiment of the disclosure, the welding strap further includes a substantially planar body, the welding portion protrudes with respect to the body, and the body, the welding portion, and the projection are parallel to one another.

According to an embodiment of the disclosure, a substantially tapered connecting portion is formed between the welding portion and the body.

According to an embodiment of the disclosure, a substantially tapered connecting portion is formed between the welding portion and the projection.

According to an embodiment of the disclosure, the body is higher than the projection.

According to an embodiment of the disclosure, a thermally conductive material is filled between the projection and the electrode terminal.

According to an embodiment of the disclosure, the projection is selected from the following shapes: circle, oval, square, rectangle and diamond.

According to an embodiment of the disclosure, an area of the projection is larger than that of the non-welding zone.

According to an embodiment of the disclosure, a ratio of a maximum outer diameter of the projection to a maximum outer diameter of the welding portion is in a range of 0.17 to 0.75.

According to an embodiment of the disclosure, the projection is formed by a stamping process.

According to an embodiment of the disclosure, the welding strap includes at least one attachment member extending perpendicularly from the body, the at least one attachment member being connected to the battery holder.

According to an embodiment of the disclosure, at least one stopper is provided on the battery holder, and the at least one attachment member is connected to the corresponding stopper.

According to an embodiment of the disclosure, the stopper is a bulge, the at least one attachment member is provided with an attachment hole and secured to the bulge via the attachment hole.

According to an embodiment of the disclosure, the bulge is provided on either side of the battery holder.

By providing a projection aligned with and spaced apart from the non-welding zone of the electrode terminal of the battery cell at the welding portion of the welding strap, it is possible to avoid welding the non-welding zone when the welding is performed, thereby protecting the non-welding zone and the battery cell. Further, the provided projection has a simple structure which is easy to be processed, may be used as a welding reference point, and has a high appearance identification, thereby ensuring that welding is accurately performed on the allowable welding zone, improving positioning accuracy of welding and welding quality of the welding strap and the electrode terminal of the battery cell, and improving safety, accuracy, and efficiency of the welding operation and yield of products.

In addition, with a discontinuous connecting portion being provided around the welding portion, on the one hand, structural interference with the housing of the battery pack is avoided, and on the other hand, the problems of the uneven energy loss and heat generation of the welding portion are alleviated.

Furthermore, with the correspondingly mating attachment members and stoppers being provided on the welding strap and the battery holder, the welding strap is securely connected to the battery holder with a simple structural design and at low cost to prevent the welding strap from becoming loose during the welding process.

### BRIEF DESCRIPTION OF THE DRAWINGS

Fig. 1 shows a schematic perspective view of a battery pack according to an embodiment of the disclosure;
Fig. 2 shows a partially schematic perspective view of the battery pack shown in Fig. 1 according to the disclosure, with an upper and lower housings being removed to show the battery holders and the welding straps;
Fig. 3 shows a partially schematic perspective view of the battery pack shown in Fig. 1 according to the disclosure, with the upper and lower housings being removed, and one of the battery holders being detached;
Fig. 4 shows a schematic view of the assembly of one battery holder with the welding straps on another battery pack;
Fig. 5 shows a perspective view of the welding strap with a projection shown in Fig. 4;
Fig. 6 shows a schematic view of the assembly of the battery holder with the welding straps shown in Fig. 4 from another perspective.

Reference numbers: 1 - battery pack; 10 - battery plug; 11 - battery cell; 12 - negative terminal; 13 - positive terminal; 2 - upper housing; 3 - lower housing; 4 - battery holder; 41 - stopper; 5 - welding strap; 51 - welding portion; 510 - body; 511 - projection; 512 - connecting portion; 52 - attachment member; 521 - attachment hole; 53 - pin.

### DETAILED DESCRIPTION

The preferred embodiments of the disclosure will be further described in detail in combination with the drawings of the description. The following description is intended to be exemplary and not to limit the disclosure, and any other similar cases fall within the scope of protection of the disclosure.

In the description of the present disclosure, it is to be noted that, unless expressly stated or limited otherwise, the terms "connect" and the like should be interpreted broadly, e.g., fixedly connect, detachably connect or integrally connect; mechanically connect or electrically connect; directly connect or indirectly connect through an intermediary. For an ordinary person skilled in the art, the specific meaning of the above terms in the present disclosure can be interpreted in accordance with specific conditions. Further, in the description of the present disclosure, the meaning of "a plurality of' means two or more than two unless otherwise specified. It should also be understood that the orientation or positional relationships indicated by the terms "center", "longitudinal", "transverse", "upper", "lower", "front", "rear", "left", "right", "vertical", "horizontal", "top", "bottom", "inner", "outer", "axial", "radial", "circumferential", and the like, are based on the orientation or positional relationships shown in the drawings, merely to facilitate and simplify the description of the present disclosure, and do not indicate or imply that the referenced means or elements must have a specific orientation, and be configured and operated in a specific orientation, and thus should not be construed as a limit on the present disclosure.

In the description, the reference terms "one embodiment", "some embodiments", "an example", "a specific example", or "some examples", etc. are intended to mean that a specific feature, structure, material, or characteristic described in connection with the embodiment or example is included in at least one embodiment or example of the present disclosure. In the description, the schematic statements of such terms do not necessarily refer to the same embodiment or example. Furthermore, the specific features, structures, materials, or characteristics described may be combined in any one or more embodiments or examples in any suitable manner.

To help those skilled in the art to understand the disclosure, the technical solutions of the disclosure will be further explained in combination with the drawings, in which like reference numbers refer to the same or similar elements.

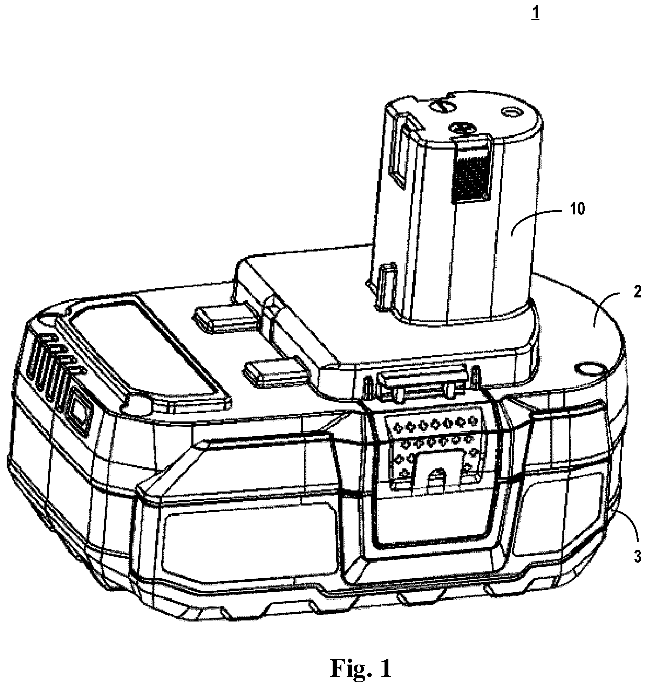

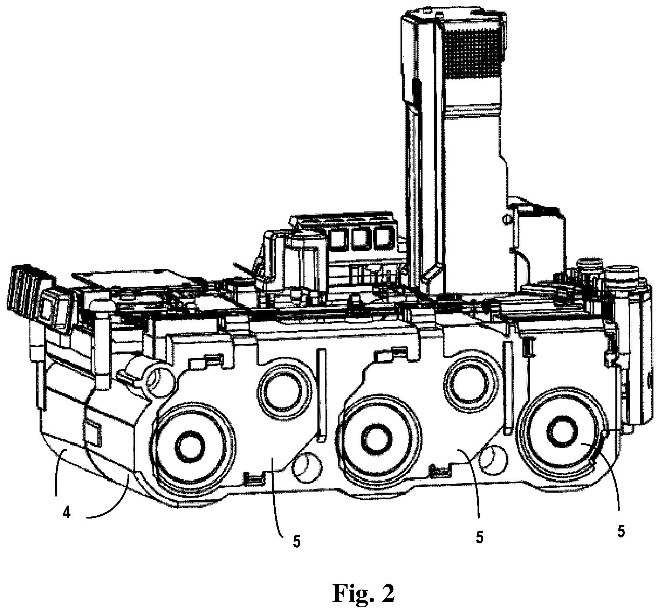

Fig. 1 shows a schematic perspective view of a battery pack 1 according to an embodiment of the disclosure. Fig. 2 shows a partially schematic perspective view of the battery pack 1 shown in Fig. 1 according to the disclosure, with an upper housing 2 and a lower housing 3 being removed to show battery holders 4 and welding straps 5.

Referring to the battery pack 1 of the disclosure shown in Figs. 1 and 2, the battery pack 1 includes battery holders 4 and a housing enclosing the battery holders 4. In one embodiment of the disclosure, the housing may include an upper housing 2 and a lower housing 3. The upper housing 2 and the lower housing 3 are connected to the battery holders by fasteners such as screws. It is understood that the housing may be provided as desired, for example, may be provided as a structure including an upper housing and a lower housing, or a structure including a left housing and a right housing, etc.

In one embodiment of the present disclosure, the battery pack is a rechargeable battery pack, preferably a lithium ion battery pack. The battery pack 1 includes at least one battery cell 11. In the preferred embodiment, the battery pack 1 includes a total of five battery cells 11. More or fewer battery cells may be used in the present disclosure. In an embodiment of the disclosure, the five battery cells are electrically connected through a series-parallel connection to provide a more stable power source. It is of course also possible to perform a series connection, a parallel connection, a series-parallel connection, etc. in different ways using different numbers of battery cells without departing from the scope of the present disclosure.

As shown in Fig. 1, the top of the upper housing 2 is provided with a battery plug 10 for electrically connecting the battery pack to an electric device or a charger. The electric device may be a power tool and the battery pack may provide power to the power tool.

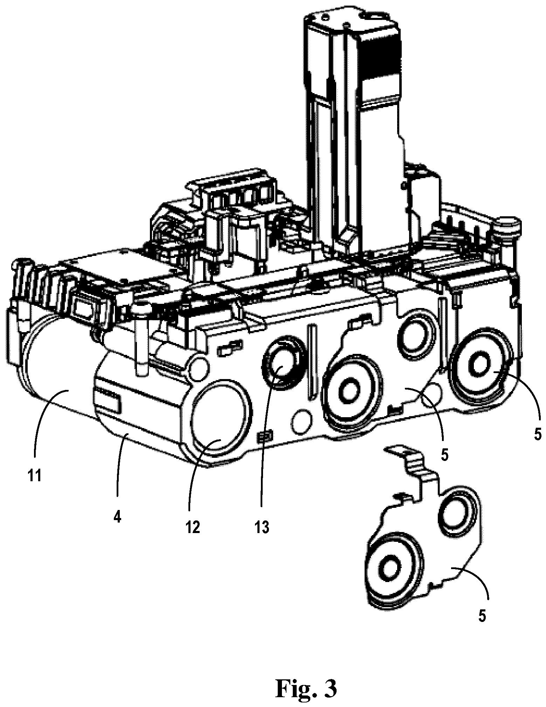

As shown in Fig. 2, the battery holders 4 are used to accommodate a plurality of battery cells (cells). In the present embodiment, two battery holders 4 are included, and assembled together to accommodate a plurality of battery cells. Of course, one battery holder 4 may be used to accommodate a plurality of battery cells. After the battery cells 11 (see Fig. 3) are accommodated in the battery holders 4, the battery cells are connected to each other using the welding straps 5. The upper housing 2 and the lower housing 3 are mounted on both upper and lower sides of the battery holders 4 to completely surround the battery holders 4, thereby fixedly mounting the battery cells in the battery pack.

Fig. 3 shows a partially schematic perspective view of the battery pack 1 shown in Fig. 1 according to the disclosure, with the upper housing 2, the lower housing 3 and one battery holder 4 being removed to show the assembly of the battery cells 11 with the battery holders 4 and the welding straps 5. Referring to Fig. 3, in the embodiment of the disclosure, a plurality of battery cells 11 are mounted in battery holders 4, and metal welding straps 5 are positioned to the zones to be welded by stoppers on the battery holders 4 and welded to electrode terminals of the battery cells 11 by a welding device. In the embodiment of the disclosure, each of the two battery holders 4 is an integrally formed plastic piece and then connected together by fasteners such as bolts. Alternatively, a single battery holder 4, as an integrally formed plastic piece, may be provided.

In an embodiment of the disclosure, the welding straps 5 are used to electrically connect the electrode terminals of the battery cells to each other and/or connect the electrode terminals to a PCBA (not shown). Preferably, the welding straps 5 are electrically connected to the electrode terminals of the battery cells 11, such as negative terminals 12 or positive terminals 13, by laser welding.

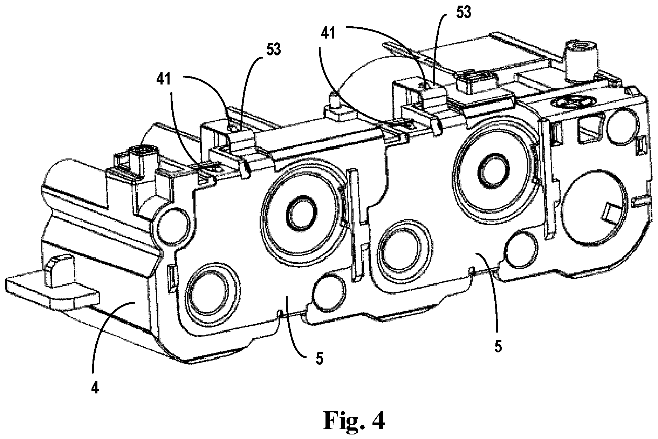

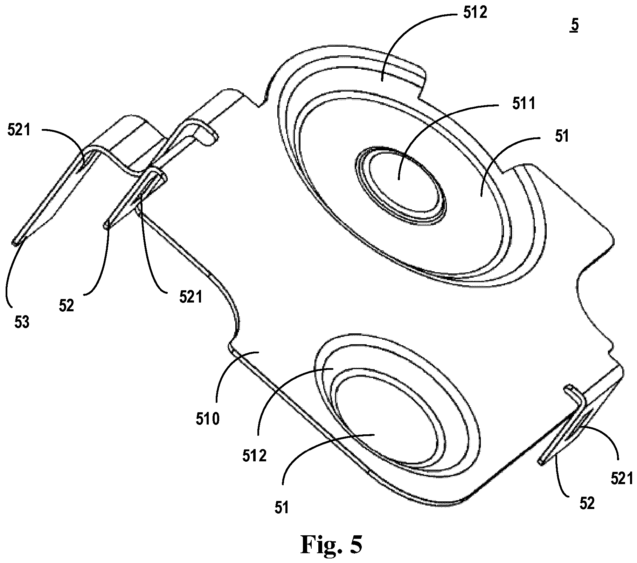

Fig. 4 shows a schematic assembly of one battery holder with the welding straps on another battery pack. Fig. 5 shows a perspective view of the welding strap with a projection shown in Fig. 4 according to the disclosure. It is to be noted that the battery holder shown in Figs. 4 to 6 is slightly different from the battery holders shown in Figs. 1 to 3, but that the welding straps and the stoppers on the battery holder shown in Figs. 4 to 6 are universal and interchangeable with those shown in Figs. 1 to 3, i.e., the description and inventive concept herein regarding the welding straps and the stoppers on the battery holders can be applied to Figs. 1 to 6. Referring to Figs. 3 to 5, each welding strap 5 includes protrusions (or welding portions) 51 protruding relative to its generally planar body 510 and a pin 53 extending from the generally planar body 510. In an embodiment of the disclosure, the battery holder 4 includes a plurality of openings corresponding to the welding portions 51 through which the electrode terminals 12 or 13 of the battery cells 11 are exposed when the battery cells 11 are placed in the battery holder 4. The protruding height of the protrusions (or welding portions) 51 of the welding strap 5 corresponds to a height difference existing between the electrode terminals 12 or 13 and the battery holder 4, whereby the welding portions 51 are used to be securely electrically connected to the electrode terminals of the battery cells 11 such as the negative terminals 12 and/or the positive terminals 13, for example, by laser welding. The pin 53 is used for electrical connection onto a PCBA to enable power management of the battery pack through the PCBA.

Referring to Figs. 2 and 3, the welding strap 5 may include at least one welding strap, for example, three welding straps 5. These welding straps 5 electrically connect a plurality of battery cells 11 (five in this embodiment) to one another. The welding straps may be welded to the terminals of the battery cells by a welding head or a laser head (not shown) of a welding tool, whereby the terminals of the battery cells may be shielded by the welding portions. Those skilled in the art will appreciate that this may be accomplished by various welding techniques.

In the drawings, the welding strap is connected to the terminals of one or two battery cells. It will be appreciated, however, that the welding strap may be connected to the terminals of other numbers of battery cells as desired. The size of the welding strap may be correspondingly provided according to the number of terminals of the battery cells to be connected. At the time of mounting, the battery cells are firstly mounted in the battery holder, and then the welding portions of the welding strap are welded to the terminals of the battery cells, and then the housings are mounted to pack the battery holder to realize the sealing of the terminals of the battery cells. In an embodiment of the disclosure, three welding straps 5 are spaced apart from one another to be electrically isolated.

While the structural composition of the battery pack has been briefly described above by way of example to assist in understanding the disclosure, the following will focus on the welding straps according to an embodiment of the disclosure. It should be noted that the structural composition of the battery pack described above (e.g. the upper housing 2, the lower housing 3 and the battery holder 4) is merely exemplary and not limiting. For example, any other structure and form of the battery holder may be included as long as the battery cells can be held in the battery pack in a predetermined configuration and arrangement. For example, the welding straps 5 may be electrically connected to the battery cells by various connection methods, for example, welding such as laser welding, resistance welding, and any other kind of welding.

As previously mentioned, for certain design considerations, one or more non-welding zones are retained in some zones of the electrode terminals of the battery cells. The welding portions of the welding strap are completely surrounded by other portions around the welding portions, which may cause structural interferences, thereby resulting in assembly problems. One welding strap is taken as an example to describe the welding straps of the disclosure, and the welding straps can solve at least some of the aforementioned problems.

For example, due to the presence of weak portions of the positive or negative terminals of the battery cells, the weak portions are liable to be irreversibly damaged by the welding operations. Therefore, in order to avoid the damage of the weak portions, non-welding zones and allowable welding zones are defined on end surfaces of the positive/negative terminals for the purpose of improving the safety in use of the battery cells.

The non-welding zones as well as the allowable welding zones may have any suitable positions, numbers, shapes, dimensions and relative arrangements. For example, the non-welding zone may be provided in the central zone of the electrode terminal, or may be provided at any other position of the electrode terminal. Only one non-welding zone may be provided on the end surface of the electrode terminal, or a larger number of non-welding zones may be provided, and these non-welding zones may have any relative positional relationships, e.g., two of the non-welding zones are adjacent to or at a distance from each other. The non-welding zone may have various shapes, such as circle, oval, triangle, rectangle, square, diamond, pentagon, or any other regular or irregular polygons, etc. The non-welding zone may have any suitable dimension. A circular non-welding zone being taken as an example, a diameter of the circular non-welding zone may be in the range of 2 mm to 6 mm, such as 2 mm, 3 mm, 4 mm, 5 mm, 6 mm, or any other larger or smaller range of dimension and value. Correspondingly, on the end surface of the electrode terminal, the other zones around the non-welding zone are allowable welding zones. With the circular non-welding zone being taken as an example, the allowable welding zones may be annular areas around the non-welding zone.

The concept of the disclosure will be described below by taking an example in which the electrode terminals of the battery cell have a circular shape and the non-welding zone is provided only on the negative terminal. However, the disclosure is not limited thereto, and the positive and negative terminals of the battery cells may have any other suitable shapes, and the non-welding zone(s) may be provided on the positive terminal or both the positive and negative terminals.

Referring to Fig. 5, there is shown one welding strap 5 as described above including protrusions (or welding portions) 51 protruding relative to its generally planar body 510 and a pin 53 extending from the generally planar body 510. The height by which the welding portions 51 protrude corresponds to the difference in height existing between the electrode terminals and the battery holder, whereby the protrusions 51 function as welding portions and are securely electrically connected to the electrode terminals of the battery cells 11, such as the negative terminal 12 and/or the positive terminal 13, by a process such as laser welding. The pin 53 is used for electrical connection to a PCBA to enable power management of the battery pack through the PCBA. The welding portion 51 is parallel to the body 510, and a connecting portion 512 is formed between the protrusion 51 and the body 510. The connecting portion 512 is preferably formed in a tapered shape, for example, in a substantially tapered shape. The protrusions (or welding portions) 51 are parallel to the body 510.

Corresponding to the non-welding zone on the negative terminal, a projection 511 is provided inside the protrusion 51. The projection 511 will be automatically aligned with and spaced from the terminal of the battery cell when the welding strap is put in place on the battery cell, specifically, aligned with and spaced from the non-welding zone. The other zones except for the projection 511 corresponds to the allowable welding zone on the negative terminal. Therefore, when the welding is performed, it will be performed on the other zones around the projection 511 to avoid the projection 511, to weld the welding portion 51 and thus the welding strap 5 onto the terminal of the battery cell 11. Herein, the body 510, the protrusion (or welding portion) 51 and the projection 511 are parallel to one another, and a substantially tapered connecting portion is formed between the welding portion 51 and the projection 511, and the body 510 is higher than the projection 511.

As can be seen from Figs. 3 to 5, each projection 511 corresponds to a non-welding zone of one electrode terminal (e.g., negative terminal 12 and/or positive terminal 13) of one battery cell 11, whereby a one-to-one correspondence is formed between each projection 511 and each non-welding zone. In this way, when the welding is performed, an accurate position correspondence is formed in a point-to-point manner (i.e., point-by-point correspondingly) between the electrode terminal and the projection 511 of the welding strap 5, and thus the welding of the non-welding zone can be avoided.

The projection 511 has a position and is in a number corresponding to the non-welding zone on the negative terminal, and the projection 511 and the non-welding zone are slightly different in shape and dimension, i.e., the projection 511 should be shaped and sized to be greater than or equal to the non-welding zone, so that the area of the projection 511 is greater than or equal to (preferably, greater than) that of the non-welding zone, i.e., a coverage area of the projection 511 should be greater than the non-welding zone to ensure that the non-welding zone will not be welded, so that the non-welding zone has a certain safety factor or margin. Herein, the projection 511 may have various shapes such as circle, oval, triangle, rectangle, square, diamond, pentagon, or any other regular or irregular polygons, etc. The projection 511 may also have any suitable dimension. A circular projection being taken as an example, the diameter of the projection may be in a range between 2 mm and 9 mm, such as 2 mm, 3 mm, 4 mm, 5 mm, 6 mm, 7 mm, 8 mm, 9 mm, or any other larger or smaller range of dimension and value.

It should be noted that the welding portions of the welding strap are described above and in the drawings in the form of the protrusions 51, but this is merely an example and not limiting. In other embodiments, for example, if the electrode terminals are flush with the battery holder without a height difference, the welding portions or welding positions of the welding strap may be planar, i.e., the welding strap 5 as a whole is planar, and the projection 511 is located at a position in these planar welding portions corresponding to the non-welding zone.

The description is made herein in the case that the non-welding zone is located at the center of the electrode terminal, and thus the projection 511 is located at the central portion of these welding portions 51. Due to manufacturing tolerance and assembly error, the non-welding zone may not be accurately located at the center of the electrode terminal, and the non-welding zone may still be prevented from being welded when the welding strap 5 is mounted onto the battery cells 11, since the shape and dimension of the above-mentioned projection 511 is preferably greater than the non-welding zone. Meanwhile, the welding may be performed concentrically around the projection 511, or it may be performed non-concentrically but eccentrically with respect to the projection 511. The safety of the non-welding zone may be ensured in both cases.

Referring to Figs. 3 to 5, the projection 511 is described for example in the form of the welding portion as the protrusion. One side (or referred to as an inner side) of the protrusion 51 of the welding strap 5 is in contact with the electrode terminal of the battery cell, and the opposite side (or referred to as an outer side) is provided with the projection 511 which is aligned with the non-welding zone of the electrode terminal of the corresponding battery cell when the welding strap is put in place and abutted against the battery cell. When manual welding is used, the operator can see the projection 511 from the outer side and thereby conveniently perform a welding operation around the projection 511 (i.e., avoid the projection 511 and thus the non-welding zone). Alternatively and/or in combination, the welding operation may be performed automatically using a welding machine (e.g., a laser welding machine) that includes a vision detection system and a welding head. The welding head uses the projection 511 as a starting point or reference point for welding when the vision detection system detects the projection 511, for example, the welding head performs the welding operation along a predetermined welding path around the projection 511 to form a predetermined welding pattern around the projection 511. The projection 511 is located at or substantially located at the center of the protrusion 51, and projects outward from the surface of the protrusion 51, i.e., the projection 511 projects from the outer side of the welding portion 51 away from one side of the electrode terminal.

It is described above that the circular projection 511 may have any suitable diameter. Similarly, the height by which the projection 511 projects may also have any suitable dimension to be spaced a sufficient safety distance from the non-welding zone of the electrode terminal, for example, in the range of 0.5 mm to 3 mm, e.g., in the range of 0.5 mm to 1 mm, 0.6 mm to 1.5 mm, 0.7 mm to 2 mm or 0.8 mm to 2.5 mm, e.g. 0.5 mm, 1 mm, 1.5 mm, 2 mm, 2.5 mm, 3 mm, or any other larger or smaller range of dimension and value. In order to facilitate the welding, the dimension of the projection 511 including the projecting height and the maximum outer diameter should be designed within a certain range. If the dimension is too small, the projection is not easy to identify in appearance. The increase of the dimension may improve the appearance identification and safety, so that the operator or the welding machine may easily identify the position and shape of the projection 511. However, if the dimension is too large, the allowable welding zone around the projection 511 will be smaller, which may affect stability of the welding. The dimension is not necessarily too large, as long as it can be ensured that the projection 511 is spaced apart from the non-welding zone by a sufficiently safety distance to keep the non-welding zone safe. Optionally, a thermally conductive material is filled between the projection 511 and the electrode terminal.

Further, the protrusion (or welding portion) 51 may have various shapes such as circle, oval, triangle, rectangle, square, diamond, pentagon, or any other regular or irregular polygons, etc. The maximum outer diameter of the protrusion (or welding portion) 51 may be in a range from 6 mm to 12 mm, such as in the range of 7 mm to 11 mm, e.g. 6 mm, 7 mm, 8 mm, 9 mm, 10 mm, 11 mm, 12 mm, or any other larger or smaller size range and value. Thus, a ratio of the maximum outer diameter of the projection 511 to the maximum outer diameter of the protrusion (or welding portion) 51 may be in a range from 0.17 to 0.75, such as 0.17 to 0.3, 0.2 to 0.5, 0.5 to 0.7, 0.2, 0.25, 0.3, 0.35, 0.4, 0.45, 0.5, 0.55, 0.6, 0.65, 0.7, 0.75, or any other larger or smaller range of ratio and value.

By selecting an appropriate range of the above ratio, it is possible to improve the appearance identification of the projection 511 with respect to the welding strap 5 and the welding portion 51, so that the projection 511 is easily seen or detected by an operator or a visual detection system of a welding machine.

The projection 511 may be formed by various suitable manufacturing processes, such as stamping. When processed using a stamping process, the projection 511 may be formed together with the welding strap in the same processing step of stamping, which saves the processing steps.

The projection 511 is shown as being circular, but this is exemplary but not limiting. The projection 511 may have any other shapes described above which fall within the scope of the disclosure. For example, the dimension of the circular projection 511, as an example, are described above. The maximum outer diameter (i.e., diameter) of the circular projection 511 may be in a range from 6 mm to 12 mm, for example, in a range of from 7 mm to 11 mm, and the height may be in a range of from 0.5 mm to 3 mm, for example, in a ranges of from 0.5 mm to 1 mm, 0.6 mm to 1.5 mm, 0.7 mm to 2 mm, or 0.8 mm to 2.5 mm. In a case where the projection 511 has a non-circular shape, the above description regarding the dimension (including the height and the maximum outer diameter) of the projection 511 and the ratio of the maximum outer diameter of the projection 511 to the maximum outer diameter of the protrusion (or welding portion) 51 is also applicable, and will not be repeated here any more.

Further, the drawings show that the projection 511 is the projecting portion located in the welding portion 51, but is not limited thereto. Alternatively, the projection 511 may be provided in the form of a hole, and may be formed, for example by a stamping process, together with the welding strap in the same processing step of stamping.

It should be noted that the applications of these projections 511 are not limited to the welding straps described herein, but may be applied to bus-bars as well, i.e., may be applied to the welding straps and bus-bars of various shapes and sizes.

As described above and referring to Figs. 3 to 5, when the welding strap 5 provided with the projection 511 is mounted onto the electrode terminal of the battery cell, the projection 511 is exposed, i.e., the projection 511 can be seen from the outside. Since the opening of the battery holder corresponds to the welding portion 51 (i.e., the protrusion 51) and the projection 511 is located or substantially located at the center of the protrusion 51, the projection 511 is also located at the substantially central position of the opening of the battery holder.

As shown in the drawings, a plurality of welding straps spaced apart from one another are provided, each of which may connect various numbers of the electrode terminals of battery cells, and the projections 511 in the number corresponding to the number of non-welding zones of the electrode terminals are provided on each of the welding straps, so that the projections 511 may be provided correspondingly according to the number and arrangement of the welding straps.

Referring to Figs. 3 to 5, the welding strap 5 may include only one welding portion 51 in which one corresponding projection 511 is provided. The welding strap 5 may also include two welding portions 51, and one corresponding projection 511 is provided in one of the welding portions 51. In the example in which the welding strap 5 includes two welding portions 51, the one welding portion 51 provided with the projection 511 corresponds to the negative terminal, since herein it is taken as an example that the non-welding zone is only provided on the negative terminal. As can be seen from Fig. 3, since the negative terminal 12 of the battery cell is larger than the positive terminal 13, the welding portion 51 corresponding to the negative terminal 12 is larger than the welding portion 51 corresponding to the positive terminal 13. But this is merely an example, and the positive and negative terminals may have any other suitable shapes, dimensions and relative sizes.

As previously described, in some battery pack designs, due to variations in the housing of the battery pack, the design in which the welding portion 51 is completely surrounded by the connecting portion 512 of the welding strap 5 may not be desirable, because some sections of the connecting portion 512 may interfere structurally with the housing of the battery pack, thereby affecting the assembly of the battery pack. Thus, some sections of the connecting portion 512 may need to be removed, i.e., the welding portion 51 is not completely surrounded by the connecting portion 512, to avoid the interferences with the housing. In some embodiments, a half of the connecting portion 512 needs to be removed so that a half of the welding portion 51 is exposed without being surrounded by the connecting portion 512. In this case, taking the diameter of the welding portion 51 and the edge of the connection portion 512 as a dividing line, the welding portion 51 is divided into two halves, so that the exposed half of the welding portion 51 and the other half surrounded by the connection portion 512 have different areas through which the current flows, whereby the energy loss and the amount of heat generation on each half are different and uneven, which is undesirable.

Therefore, it is necessary to enlarge the connecting portion 512 to surround more of the welding portion 51, thereby alleviating the above-mentioned problem. Figs. 3 to 5 show such a solution for enlargement of the connecting portion 512, in which the welding portion 51, corresponding to the negative terminal 12, provided with the projection 511 is taken as an example. But the disclosure is not limited thereto, and the welding portion 51 corresponding to the positive terminal 13 may also have the problem of removing a part of the connection portion 512, and the solution for enlargement of the connecting portion 512 described above is also applicable to the welding portion 51 corresponding to the positive terminal 13.

Referring to Fig. 5, the connecting portion 512 may surround 50% to 95%, preferably 70% to 90%, and most preferably 75% to 85% of the welding portion 51. That is, the connection portion 512 around the welding portion 51 is discontinuous. It is shown in Fig. 5 that the connecting portion 512 includes one cutting-off zone, but this is merely an example and the disclosure is not limited thereto. The connecting portion 512 may include two or more cutting-off zones, and these cutting-off zones may have the same or different dimensions from each other.

Referring to Figs. 4 and 5, the welding strap 5 includes a pin 53 extending from a generally planar body 510 for electrical connection to a PCBA, thus, the power management of the battery pack may be realized through the PCBA. As described above, when the welding strap 5 is placed on the electrode terminal of the battery cell to perform the welding, in order to facilitate the operation, the welding strap 5 needs to be positioned or fixed to prevent the position thereof from being moved during the transfer or turning over of the battery pack, affecting the normal progress of the subsequent processes. Therefore, the welding strap 5 needs to be positioned and/or fixed onto the battery holder 4. In addition to the pin 53, the body 510 also includes at least one attachment member 52 which is to be fastened to the battery holder 4, and extends perpendicularly from the body 510 like the pin 53. The attachment members 52 are shown in the form of elongated strips extending from opposite sides of the welding strap 5. But this is only an example, and the attachment members 52 may have any other suitable shapes.

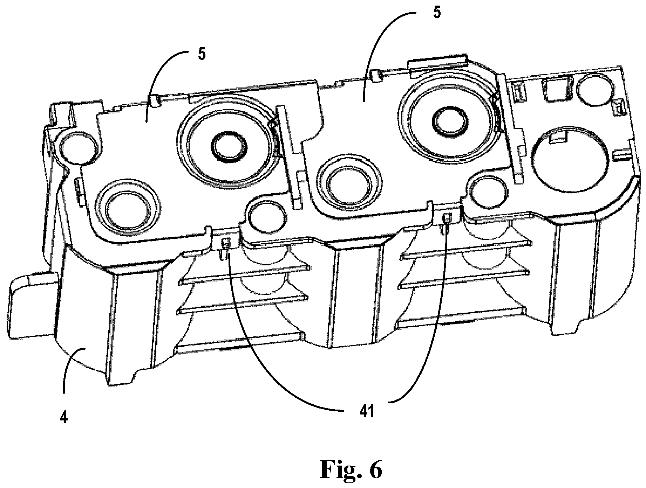

The attachment member 52 is provided with an attachment hole 521. Similarly, the pin 53 is also provided with an attachment hole 521. Corresponding to the attachment holes 521, the opposite sides of the battery holder 4 are provided with at least one stopper 41 in form of bulges. These bulges are inserted into the attachment holes 521 and secured to fasten (e.g., hook) the attachment members 52 on the battery holder. These attachment members 52 are fixedly connected to the battery holder via form fit between the attachment holes 521and the bulges 41, to prevent the welding strap 5 from loosening during the subsequent welding processes. Figs. 4 and 6 show that stoppers 41 are disposed on both sides of the battery holder 4. Three stoppers 41 are provided and located on opposite sides of the battery holder, so that the welding strap may be securely fastened to both sides of the battery holder.

As described above, by providing the projection aligned with and spaced apart from the non-welding zone of the electrode terminal of the battery cell at the welding portion of the welding strap, it is possible to avoid welding the non-welding zone when the welding is performed, thereby protecting the non-welding zone and the battery cell. Further, the provided projection has a simple structure which is easy to be processed, may be used as a welding reference point, and has a high appearance identification, thereby ensuring that welding is accurately performed on the allowable welding zone, improving positioning accuracy of welding and welding quality of the welding strap and the electrode terminal of the battery cell, and improving safety, accuracy, and efficiency of the welding operation and yield of products.

In addition, with a discontinuous connecting portion being provided around the welding portion, on the one hand, structural interference with the housing of the battery pack is avoided, and on the other hand, the problems of the uneven energy loss and heat generation of the welding portion are alleviated. Furthermore, with correspondingly mating attachment members and stoppers being provided on the welding strap and the battery holder, the welding strap is securely connected to the battery holder with a simple structural design and at low cost to prevent the welding strap from becoming loose during the welding process.

While specific embodiments of the disclosure have been described above, it will be understood by those skilled in the art that these are merely illustrative and the scope of the disclosure is defined by the appended claims. Various combinations, variations, and modifications of the embodiments can be made by those skilled in the art without departing from the principles and spirit of the disclosure, and it is intended that such combinations, variations, and modifications all fall within the scope of the disclosure.

## Claims

1. A battery pack (1) including:
a battery holder (4);
a battery cell (11) surrounded by and supported in the battery holder (4);
a welding strap (5), **characterized in that** the welding strap (5) includes a welding portion (51) welded to an electrode terminal of the battery cell (11) to make an electrical connection, and a projection (511) located at a central portion of the welding portion (51), the projection (511) being spaced apart from the electrode terminal of the battery cell (11).

2. The battery pack according to claim 1, wherein the projection (511) is aligned with and spaced apart from a non-welding zone of a negative terminal (12) of the battery cell (11).

3. The battery pack according to either claim 1 or claim 2, wherein the welding strap (5) further includes a generally planar body (510), the welding portion (51) protrudes with respect to the body (510), and the body (510), the welding portion (51) and the projection (511) are parallel to one another.

4. The battery pack according to any of the previous claims, in particular claim 3, wherein a substantially tapered connecting portion (512) is formed between the welding portion (51) and the body (510).

5. The battery pack according to any of the previous claims, in particular claim 3, wherein a substantially tapered connecting portion is formed between the welding portion (51) and the projection (511).

6. The battery pack according to any of the previous claims, in particular claim 3, wherein the body (510) is higher than the projection (511).

7. The battery pack according to any one of the previous claims, wherein a thermally conductive material is filled between the projection (511) and the electrode terminal.

8. The battery pack according to any one of the previous claims, wherein the projection (511) is selected from the following shapes: circle, oval, square, rectangle, and diamond.

9. The battery pack according to any one of the previous claims, in particular claim 2, wherein an area of the projection (511) is equal to or larger than that of the non-welding zone.

10. The battery pack according to any one of the previous claims, in particular claim 2, wherein a ratio of a maximum outer diameter of the projection (511) to a maximum outer diameter of the welding portion (51) is in the range of 0.17 to 0.75.

11. The battery pack according to any one of the previous claims, wherein the projection (511) is formed by a stamping process.

12. The battery pack (1) according to any of claims 1-11, wherein the welding strap (5) includes at least one attachment member (52) extending perpendicularly from the body (510), the at least one attachment member (52) being connected to the battery holder (4).

13. The battery pack (1) according to claim 12, wherein at least one stopper (41) is provided on the battery holder (4), the at least one attachment member (52) being connected to the corresponding stopper (41).

14. The battery pack (1) according to claim 13, wherein the stopper (41) is a bulge, and the at least one attachment member (52) is provided with an attachment hole (521) and secured to the bulge via the attachment hole (521).

15. The battery pack (1) according to claim 14, wherein the bulge is provided on either side of the battery holder (4).
